# EUROPÄISCHE PATENTANMELDUNG

(11) **EP 1 650 465 A1**
(43) Veröffentlichungstag der Anmeldung: **26.04.2006**
(21) Anmeldenummer: 04105251.5
(22) Anmeldetag: 22.10.2004
(51) Int. Cl.: F16F 1/02, F16F 7/00, F16F 15/02

(54) **Vorrichtung zur Beeinflussung der Schwingungen eines schwingungsfähigen Systems und Verfahren zur Beeinflussung des Schwingungsverhaltens eines schwingungsfähigen Systems unter Verwendung einer derartigen Vorrichtung**

(71) Anmelder: Ford Global Technologies, LLC, A subsidary of Ford Motor Company, Dearborn, MI 48126 (US)
(72) Erfinder: Kluge, Torsten, Dr., 51491 Overath (DE)
(74) Vertreter: Drömer, Hans-Carsten

(57) **Zusammenfassung**

Die Erfindung betrifft eine Vorrichtung (1) zur Beeinflussung der Schwingungen mindestens eines schwingungsfähigen Systems (4a, 4b, 4c ,4d), insbesondere zur Erzeugung, Kompensierung und Isolierung von Schwingungen, die mit mindestens einer Schwingungsmasse (3) ausgestattet ist und einen Aktuator aufweist, mit dem diese mindestens eine Schwingungsmasse (3) zu einer erzwungenen Schwingung anregbar ist, wobei die Vorrichtung (1) zwecks Einleitung der Schwingungen der mindestens einen Schwingungsmasse (3) mit dem mindestens einen schwingungsfähigen System (4a, 4b, 4c, 4d) verbindbar ist.

Des Weiteren betrifft die Erfindung ein Verfahren zur Beeinflussung der Schwingungen des mindestens einen schwingungsfähigen Systems unter Verwendung einer derartigen Vorrichtung (1).

Es soll eine Vorrichtung (1) der oben genannten Art bereitgestellt werden, die die Möglichkeit bietet, die Schwingungen mindestens eines schwingungsfähigen Systems (4a, 4b, 4c, 4d) kostengünstig und platzsparend zu beeinflussen.

Erreicht wird dies mit einer Vorrichtung (1), bei der der Aktuator mindestens einen künstlichen Muskel (2a, 2b, 2c, 2d) umfaßt, durch dessen Aktivierung die mindestens eine Schwingungsmasse (3) zu einer erzwungenen Schwingungen anregbar ist.

## Beschreibung

Die Erfindung betrifft eine Vorrichtung zur Beeinflussung der Schwingungen mindestens eines schwingungsfähigen Systems, insbesondere zur Erzeugung, Kompensierung und Isolierung von Schwingungen, die mit mindestens einer Schwingungsmasse ausgestattet ist und einen Aktuator aufweist, mit dem diese mindestens eine Schwingungsmasse zu einer erzwungenen Schwingung anregbar ist, wobei die Vorrichtung zwecks Einleitung der Schwingungen der mindestens einen Schwingungsmasse mit dem mindestens einen schwingungsfähigen System verbindbar ist.

Des Weiteren betrifft die Erfindung ein Verfahren zur Beeinflussung der Schwingungen des mindestens einen schwingungsfähigen Systems unter Verwendung einer derartigen Vorrichtung.

Schwingungen erlangen bei der Konstruktion und Auslegung von Kraftfahrzeugen und Brennkraftmaschinen zunehmend an Bedeutung.

Unter anderem wird versucht, das von der Brennkraftmaschine verursachte Geräusch gezielt zu beeinflussen und zu modellieren. In diesem Zusammenhang wird auch von Geräuschdesign bzw. Sounddesign gesprochen. Motiviert werden diese Entwicklungsarbeiten auch durch die Erkenntnis, daß die Kaufentscheidung der Kunden beim Erwerb eines Fahrzeuges nicht unwesentlich und in zunehmendem Umfang sogar maßgeblich vom Geräusch der Brennkraftmaschine bzw. des Fahrzeugs mitbeeinflußt wird. So bevorzugt der Fahrer eines Sportwagens ein Fahrzeug bzw. einen Motor, dessen Geräusch den sportlichen Charakter des Fahrzeuges unterstreicht.

Im Rahmen des Geräuschdesigns bzw. Sounddesigns werden Schwingungen kompensiert d. h. eliminiert oder ausgelöscht, oder einzelne Schwingungen einer bestimmten Frequenz isoliert bzw. herausgefiltert und gegebenenfalls weiter bearbeitet, wozu es auch sinnvoll sein kann zusätzliche Schwingungen zu generieren und diese der zu beeinflussenden Schwingung zu überlagern.

Beim Sounddesign wird dabei unter anderem Einfluß genommen auf die Schwingungen der Brennkraftmaschine und ihrer Nebenaggregate, die letztendlich ursächlich verantwortlich sind für die emittierten Geräusche. Die Brennkraftmaschine und die Nebenaggregate sind schwingungsfähige Systeme, deren Schwingungsverhalten mit Vorrichtungen der oben genannten Art beeinflußt werden kann. Weitere Beispiele für schwingungsfähige Systeme bilden der Motorblock, das Kurbelgehäuse, das Fahrzeugchassis, das Fahrwerk und insbesondere die Kurbelwelle, wobei dies keine abschließende Aufzählung der Systeme darstellen soll, die im Rahmen der vorliegenden Erfindung als schwingungsfähige Systems zu betrachten sind. Kombinationen der genannten Systeme stellen wieder in ihrer Gesamtheit schwingungsfähige Systeme dar.

Herkömmliche Brennkraftmaschinen von Personenkraftfahrzeugen haben aber in der Regel ein eher langweiliges Motorengeräusch. Die Gründe hierfür werden leicht verständlich, wenn die unterschiedlichen Geräuschquellen analysiert werden.

Als Geräuschquellen an einem Kraftfahrzeug können unterschieden werden:
■ Strömungsgeräusche,
■ Geräusche durch Körperschallabstrahlung, und
■ Geräusche durch Körperschalleinleitung in die Karosserie über die Motorlagerung.

Zu den Strömungsgeräuschen zählen beispielsweise das Auspuffmündungsgeräusch, das Ansauggeräusch und das Kühler-Lüftergeräusch, wohingegen zu den Geräuschen durch Körperschallabstrahlung das eigentliche Motorgeräusch und die Abstrahlung der Auspuffanlage gehört. Die durch Stöße und Wechselkräfte zu Körperschallschwingungen angeregte Motorstruktur strahlt über ihre Motoroberflächen den Körperschall als Luftschall ab und generiert auf diese Weise das eigentliche Motorgeräusch.

Die wichtigsten Bauteile mit Stoß- und Kraftanregung sind das Kurbelgehäuse, der Zylinderblock, der Zylinderkopf, der Kurbeltrieb, der Kolben und der Ventiltrieb. Diese Bauteile sind den Massen- und Gaskräften ausgesetzt. Der Kurbeltrieb umfaßt dabei insbesondere die Kurbelwelle, den Kolben, den Kolbenbolzen und die Pleuelstange.

Die beiden genannten Gruppen von Geräuschen sind verantwortlich für das Vorbeifahrgeräusch, wobei das Fahrzeuginnengeräusch ebenfalls von diesen Quellen verursacht wird.

Von besonderer Bedeutung für den akustischen Fahrkomfort ist hingegen die Körperschalleinleitung über die Motorlagerung, weshalb sich die Entwicklungen insbesondere auf die Minderung und Dämpfung der durch Körperschalleinleitung über die Motorlagerung in die Fahrzeugkarosserie eingeleiteten Schwingungen konzentrieren. Darüber hinaus sind aber grundsätzlich auch alle anderen durch Körperschalleinleitung hervorgerufenen Schwingungen im Focus der Entwicklungsarbeiten zur Minderung bzw. Beeinflussung der Geräuschemission und Erhöhung des Fahrkomforts.

Am Beispiel des Kurbeltriebs bzw. der Kurbelwelle soll das Phänomen der Schwingungen näher betrachtet werden.

Die Kurbelwelle bildet zusammen mit den an ihr angekoppelten Triebwerksteilen ein schwingungsfähiges System. Dabei wird die Kurbelwelle durch die sich zeitlich verändernden Drehkräfte, welche über die an den einzelnen Kurbelzapfen angelenkten Pleuelstangen in die Kurbelwelle eingeleitet werden, zu Drehschwingungen angeregt. Die Drehschwingungen der Kurbelwelle führen dabei sowohl zu Geräuschen durch Körperschallabstrahlung als auch zu Geräuschen durch Körperschalleinleitung in die Karosserie und in die Brennkraftmaschine. Bei Anregung der Kurbelwelle im Eigenfrequenzbereich kann es dabei zu hohen Drehschwingungsamplituden kommen, die sogar zum Dauerbruch führen können, was zeigt, daß die Schwingungen nicht nur in Zusammenhang mit einem Sounddesign von Interesse sind, sondern auch im Hinblick auf die Festigkeit der Bauteile eine Rolle spielen.

Die Drehschwingungen der Kurbelwelle werden auch aus anderen Gründen untersucht. So führen die Drehschwingungen der Kurbelwelle zu mehr oder weniger großen Drehzahlschwankungen. Des weiteren werden die Drehschwingungen der Kurbelwelle ungewollt über den Steuertrieb bzw. Nockenwellenantrieb auf die Nockenwelle übertragen, wobei die Nockenwelle selbst auch ein schwingungsfähiges System darstellt und weitere System insbesondere den Ventiltrieb zu Schwingungen anregen kann.

Der Drehkraftverlauf an einer Kurbelkröpfung einer Viertaktbrennkraftmaschine ist periodisch, wobei sich die Periode über zwei Umdrehungen der Kurbelwelle erstreckt. Üblicherweise wird der Drehkraftverlauf mittels Fourier-Analyse in seine harmonischen Anteile zerlegt, um Aussagen über die Erregung von Drehschwingungen treffen zu können. Dabei setzt sich der tatsächliche Drehkraftverlauf aus einer konstanten Drehkraft und einer Vielzahl von sich harmonisch verändernden Drehkräften zusammen, die unterschiedliche Drehkraftamplituden und Frequenzen bzw. Schwingzahlen aufweisen. Das Verhältnis der Schwingzahl nᵢ jeder Harmonischen zur Drehzahl n der Kurbelwelle bzw. des Motors, wird als die Ordnung i der Harmonischen bezeichnet.

Aufgrund der hohen dynamischen Belastung der Kurbelwelle durch die Massen- und Gaskräfte sind die Konstrukteure bei der Auslegung der Brennkraftmaschine bemüht, einen möglichst weitgehenden d.h. optimierten Massenausgleich zu realisieren. Dabei werden unter dem Begriff "Massenausgleich" sämtliche Maßnahmen zusammengefaßt, die die Wirkung der Massenkräfte nach außen kompensieren bzw. verringern.

In diesem Zusammenhang besteht ein Lösungsansatz in der gezielten Abstimmung der Kröpfung der Kurbelwelle, der Anzahl und der Anordnung der Zylinder und der Zündfolge in der Weise, daß ein möglichst optimaler Massenausgleich erzielt wird.

Ein Sechs-Zylinder-Reihenmotor kann auf diese Weise vollständig ausgeglichen werden. Die sechs Zylinder werden paarweise in der Art zusammengefaßt, daß sie mechanisch als Zylinderpaar parallel laufen. So werden der erste und sechste Zylinder, der zweite und fünfte Zylinder und der dritte und vierte Zylinder zu einem Zylinderpaar zusammengefaßt, wobei die Kurbelwellenzapfen bzw. -kröpfungen der drei Zylinderpaare um jeweils 120° KW versetzt auf der Kurbelwelle angeordnet sind. Mechanisch parallel laufend bedeutet, daß die beiden Kolben der zwei mechanisch parallel laufenden Zylinder sich bei demselben °KW (Grad Kurbelwinkel) im oberen Totpunkt (OT) bzw. unteren Totpunkt (UT) befinden. Bei Wahl einer geeigneten Zündfolge werden die Massenkräfte völlig ausgeglichen.

Die am Beispiel des Sechs-Zylinder-Reihenmotors beschriebenen Effekte lassen sich auf andere Motoren übertragen, bei denen die Kurbelwellenkröpfungen und die Zündfolge ebenfalls im Hinblick auf einen möglichst optimalen Massenausgleich festgelegt werden können. Ein vollständiger Massenausgleich - wie bei dem oben beschriebenen Sechs-Zylinder-Reihenmotor - ist aber in der Regel nicht realisierbar, so daß weitere Maßnahmen ergriffen werden müssen.

Ausgangspunkt dabei ist der Umstand, daß die Kurbelwelle durch die sich zeitlich verändernden Drehkräfte, welche sich aus den Gaskräften und Massenkräften des Kurbeltriebes zusammensetzen, belastet wird. Die Massen des Kurbeltriebes d.h. die Einzelmassen der Pleuelstange, des Kolbens, des Kolbenbolzen und der Kolbenringe, lassen sich in eine oszillierende Ersatzmasse und eine rotierende Ersatzmasse überführen. Die Massenkraft der rotierenden Ersatzmasse kann in einfacher Weise durch auf der Kurbelwelle angeordnete Gegengewichte in ihrer Außenwirkung ausgeglichen werden.

Schwieriger gestaltet sich der Ausgleich der durch die oszillierende Ersatzmasse hervorgerufenen rotierenden Massenkraft, die sich näherungsweise aus einer Massenkraft 1. Ordnung, die mit der Motorendrehzahl umläuft, und einer Massenkraft 2. Ordnung, die mit zweifacher Motorendrehzahl umläuft, zusammensetzt, wobei Kräfte höherer Ordnung vernachlässigbar sind. Es ist daher grundsätzlich ein Ziel der Konstrukteure, die oszillierenden Massen möglichst gering zu halten und die Bauteile materialsparend auszulegen, wobei die erforderliche Festigkeit der Bauteile dieser Vorgehensweise Grenzen setzt.

Die rotierenden Massenkräfte jeder Ordnung können nahezu ausgeglichen werden durch die Anordnung von zwei gegensinnig rotierenden mit entsprechenden Gewichten versehenen Wellen. Die Wellen für den Ausgleich der Massenkräfte 1. Ordnung laufen dabei mit Motorendrehzahl und die Wellen für den Ausgleich der Massenkräfte 2. Ordnung mit zweifacher Motorendrehzahl um. Diese Art des Massenausgleichs ist sehr kostenintensiv, aufwendig und weist einen hohen Raumbedarf auf, so daß er in dieser Weise nur bei Rennmotoren, bei denen die Herstellungskosten von untergeordneter Bedeutung sind, verwirklicht wird. Zudem ergeben sich selbst bei einem vollständigen Ausgleich der rotierenden Massenkräfte Massenmomente, da die Massenkräfte der einzelnen Zylinder in den Zylindermittelebenen wirken.

Die gemachten Ausführungen zeigen, daß ein hoher Bedarf an Vorrichtungen und Verfahren besteht, mit denen Schwingungen beeinflußt werden können. Insbesondere kann im Rahmen des Geräuschdesigns die Beeinflussung von Schwingungen, die letztendlich ursächlich verantwortlich sind für das emittierte Geräusch, zielführend sein. Aber auch beim Massenausgleich einer Brennkraftmaschine kann die Einflußnahme auf die von den Massenkräften hervorgerufenen Schwingungen hilfreich sein.

Vor diesem Hintergrund ist es die Aufgabe der vorliegenden Erfindung, eine Vorrichtung gemäß dem Oberbegriff des Anspruchs 1 d. h. der gattungsbildenden Art bereitzustellen, die insbesondere die Möglichkeit bietet, die Schwingungen mindestens eines schwingungsfähigen Systems kostengünstig und platzsparend zu beeinflussen.

Eine weitere Teilaufgabe der vorliegenden Erfindung ist es, ein Verfahren zur Beeinflussung der Schwingungen mindestens eines schwingungsfähigen Systems unter Verwendung einer derartigen Vorrichtung aufzuzeigen.

Gelöst wird die erste Teilaufgabe durch eine Vorrichtung zur Beeinflussung der Schwingungen mindestens eines schwingungsfähigen Systems, insbesondere zur Erzeugung, Kompensierung und Isolierung von Schwingungen, die mit mindestens einer Schwingungsmasse ausgestattet ist und einen Aktuator aufweist, mit dem diese mindestens eine Schwingungsmasse zu einer erzwungenen Schwingung anregbar ist, wobei die Vorrichtung zwecks Einleitung der Schwingungen der mindestens einen Schwingungsmasse mit dem mindestens einen schwingungsfähigen System verbindbar ist, und die dadurch gekennzeichnet ist, daß der Aktuator mindestens einen künstlichen Muskel umfaßt, durch dessen Aktivierung die mindestens eine Schwingungsmasse zu einer erzwungenen Schwingungen anregbar ist.

Künstliche Muskeln sind Aktuatoren, welche in ihren Eigenschaften der natürlichen Muskulatur ähneln bzw. nachgebildet sind. Charakteristisch für künstliche Muskeln ist insbesondere eine im Volumen stattfindende Krafterzeugung aufgrund atomarer oder molekularer Wechselwirkungen. Häufig bestehen künstliche Muskeln - ähnlich wie natürliche Muskeln - aus einem gestaltveränderlichen, weichen Material.

Die Krafterzeugung in bekannten künstlichen Muskeln kann z. B. auf elektrostatischen Anziehungskräften, auf dem piezoelektrischen Effekt, auf einer Ultraschallerzeugung, auf einem Formgedächtnis von Materialien, auf einem lonenaustausch, auf einer Streckung von Kohlenstoff-Nanoröhrchen und/oder auf der Einlagerung von Wasserstoff in Metallhydride beruhen.

Je nach Wirkungsprinzip können künstliche Muskeln aus Polymeren, insbesondere Polymer-Gelen, aus ferroelektrischen Substanzen, aus Silizium, aus Legierungen mit einem Formgedächtnis oder dergleichen hergestellt sein. Eine detaillierte Beschreibung verschiedener Arten künstlicher Muskeln ist z. B. in der EP 0 924 033 A2, der US 2002/0026794 A1, der US 6 109 852 und ähnlicher Patentliteratur zu finden. Darüber hinaus sind Beispiele künstlicher Muskeln in Publikationen der einschlägigen Forschungsinstitute beschrieben (z. B. Max-Planck-Institut für Festkörperforschung in Stuttgart; Abteilung für künstliche Intelligenz des MIT, Massachusetts, USA).

Dadurch, daß die erfindungsgemäße Vorrichtung einen künstlichen Muskel verwendet, kann eine platzsparende Vorrichtung zur Beeinflussung der Schwingungen mindestens eines schwingungsfähigen Systems bereitgestellt werden, die zudem nur ein geringes Eigengewicht aufweist. Das Material, aus dem künstliche Muskeln ausgebildet sind, ist von einem geringeren spezifischen Gewicht als herkömmliche Werkstoffe zur Herstellung von Vorrichtungen der gattungsbildenden Art, beispielsweise von Schwingungstilgern. Im Vergleich zu der in der Beschreibungseinleitung erörterten Maßnahme zum Ausgleich der rotierenden Massenkraft eines Kurbeltriebes ist die erfindungsgemäße Vorrichtung ein erheblicher Fortschritt, insbesondere im Hinblick auf die Kosten und den Platzbedarf der Vorrichtung.

Durch die Verwendung eines künstlichen Muskels zur Ausbildung des Aktuators kann die mindestens eine Schwingungsmasse ohne viel Aufwand durch einfache Aktivierung des künstlichen Muskels in Schwingungen versetzt werden, was beispielsweise durch Zuführung elektrischer Energie bzw. eines elektrischen Signals erfolgen kann. Es können erzwungene Schwingungen unterschiedlicher Frequenz und Amplitude erzeugt werden, so daß beispielsweise Schwingung einer ganz diskreten Frequenz der Schwingung bzw. den Schwingungen des mindestens einen schwingungsfähigen Systems überlagert werden können.

Darüber hinaus können gezielt Schwingung einer ganz diskreten Frequenz des mindestens einen schwingungsfähigen Systems verstärkt bzw. kompensiert werden. Damit bietet die erfindungsgemäße Vorrichtung zahlreiche Möglichkeiten im Rahmen des Geräuschdesigns die emittierten, durch die Schwingungen hervorgerufenen Geräusche zu modellieren bzw. zu beeinflussen. Des weiteren ermöglicht die erfindungsgemäße Vorrichtung, Massenkräften in ihrer Außenwirkung zu kompensieren.

Darüber hinaus kann der künstliche Muskel gleichzeitig als Aufhängung für die Schwingungsmasse verwendet werden, was weiter unten im Rahmen der bevorzugten Ausführungsformen noch erläutert werden wird, die Anzahl der Bauteile verringert und das Eigengewicht weiter vermindert.

Durch die Verwendung eines künstlichen Muskels zur Ausbildung des Aktuators wird somit die erste der Erfindung zugrunde liegende Aufgabe gelöst, nämlich eine Vorrichtung zur Beeinflussung der Schwingungen mindestens eines schwingungsfähigen Systems bereitzustellen, die insbesondere die Möglichkeit bietet, die Schwingungen des mindestens einen schwingungsfähigen Systems kostengünstig und platzsparend zu beeinflussen.

Weitere vorteilhafte Ausführungsformen der Vorrichtung werden im Zusammenhang mit den Unteransprüchen erörtert.

Vorteilhaft sind Ausführungsformen der Vorrichtung, bei denen die Vorrichtung mit dem mindestens einen schwingungsfähigen System mittels des mindestens einen künstlichen Muskels verbindbar ist.

Bei dieser Ausführungsform wird dem künstlichen Muskel eine Doppelfunktion zugewiesen. Einerseits wird der mindestens eine künstliche Muskel zur Ausbildung des Aktuators verwendet. Andererseits wird der mindestens eine künstliche Muskel gleichzeitig dazu herangezogen, diese erzwungene Schwingung in das mindestens eine schwingungsfähige System einzuleiten d.h. die Vorrichtung mit dem mindestens einen schwingungsfähigen System zu verbinden, wobei insbesondere die durch die Bewegung der Schwingungsmasse generierten Trägheitskräfte in den künstlichen Muskel und mittels des Muskels in das mindestens eine schwingungsfähige System eingeleitet werden. Diese Trägheitskräfte, die mittels des künstlichen Muskels generiert und dem mindestens einen schwingungsfähigen System aufgeprägt werden, zwingen dem mindestens einen schwingungsfähigen System eine Schwingung auf und beeinflussen damit das Schwingungsverhalten dieses Systems.

Die Verbindung des künstlichen Muskels mit einem schwingungsfähigen System kann unter Verwendung von Zwischenelementen erfolgen. Der künstliche Muskel kann aber auch direkt am schwingungsfähigen System angelenkt werden.

Vorteilhaft sind Ausführungsformen der Vorrichtung, bei denen der mindestens eine künstliche Muskel mit einem Ende mit der mindestens einen Schwingungsmasse verbunden ist. Der mindestens eine künstliche Muskel, der zur Ausbildung des Aktuators verwendet wird, ändert bei der Aktivierung seine äußere Gestalt, wodurch die mindestens eine Schwingungsmasse zu erzwungenen Schwingungen anregt wird.

Vorteilhaft sind Ausführungsformen der Vorrichtung, bei denen ein künstlicher Muskel und eine Schwingungsmasse vorgesehen sind, wobei der künstliche Muskel mit einem Ende mit der Schwingungsmasse verbunden ist. Das andere Ende des künstlichen Muskels wird vorzugsweise mit einem schwingungsfähigen System verbunden. Durch Aktivierung ändert der künstliche Muskel seine äußere Gestalt. Bei Verwendung von künstlichen Muskeln, die bei Aktivierung expandieren bzw. sich kontrahieren können eindimensionale Schwingungen der Schwingungsmasse erzwungen werden.

Vorteilhaft sind aber auch Ausführungsformen der Vorrichtung, bei denen zwei künstliche Muskeln und eine Schwingungsmasse vorgesehen sind, wobei jeder der beiden künstlichen Muskeln mit einem Ende mit der Schwingungsmasse verbunden ist.

Vorteilhaft sind dabei Ausführungsformen der Vorrichtung, bei denen die beiden künstlichen Muskeln an gegenüberliegenden Seiten der Schwingungsmasse mit einem Ende angelenkt sind, wobei jeder der beiden künstlichen Muskeln mit dem anderen Ende mit einem schwingungsfähigen System in der Art verbindbar ist, daß eindimensionale, oszillierende Schwingungen der Schwingungsmasse realisierbar sind. Bei dieser Ausführungsform wird die Schwingungsmasse zwischen den beiden künstlichen Muskeln aufgespannt. Wie bei der zuvor beschriebenen Ausführungsform mit nur einem künstlichen Muskel oszilliert die Schwingungsmasse, wobei ein zweiter zusätzlicher Muskel zum einen die oszillierende Bewegung der Schwingungsmasse stabilisiert und zum anderen den anderen Muskel in der Art unterstützt, daß die Erregerkraft verstärkt wird. Die beiden künstlichen Muskeln können mit dem anderen Ende mit demselben schwingungsfähigen System oder mit verschiedenen schwingungsfähigen Systemen verbunden werden.

Vorteilhaft sind bei der Verwendung von zwei künstlichen Muskeln und einer Schwingungsmasse auch Ausführungsformen der Vorrichtung, bei denen die beiden künstlichen Muskeln an derselben Seite der Schwingungsmasse mit einem Ende angelenkt sind, wobei jeder der beiden künstlichen Muskeln mit dem anderen Ende mit einem schwingungsfähigen System in der Art verbindbar ist, daß Schwingungen der Schwingungsmasse quer zu den Längsachsen der künstlichen Muskeln realisierbar sind. Vorzugsweise werden die beiden künstlichen Muskeln mit dem anderen Ende mit demselben schwingungsfähigen System verbunden.

Diese Ausführungsform der Vorrichtung gestattet die Generierung von Trägheitsmomenten infolge der rotationsähnlichen Bewegung der Schwingungsmasse quer zu den Längsachsen der künstlichen Muskeln. Dabei können die beiden Muskeln einen Verbund bilden und schichtartig aufeinander angeordnet sein. Bei geeigneter Aktivierung der Muskeln schwingt der Muskelverbund ähnlich einem Biegebalken, der zu Biegeschwingungen angeregt wird, wodurch die an den Enden der beiden Muskeln vorgesehene Schwingungsmasse zu einer erzwungenen Schwingungen um den Anlenkpunkt der Muskeln an dem mindestens einen schwingungsfähigen System angeregt wird. Diese Ausführungsform wird noch weiter unten im Zusammenhang mit den Figuren erläutert.

Vorteilhaft sind auch Ausführungsformen der Vorrichtung, bei denen drei künstliche Muskeln und eine Schwingungsmasse vorgesehen sind, wobei jeder der drei künstlichen Muskeln mit einem Ende mit der Schwingungsmasse verbunden ist.

Vorteilhaft sind dabei Ausführungsformen der Vorrichtung, bei denen die drei künstlichen Muskeln an verschiedenen Seiten der Schwingungsmasse mit einem Ende angelenkt sind, wobei jeder der drei künstlichen Muskeln mit dem anderen Ende mit einem schwingungsfähigen System in der Art verbindbar ist, daß zweidimensionale Schwingungen der Schwingungsmasse realisierbar sind. Bei dieser Ausführungsform kann die Schwingungsmasse zweidimensionale Schwingungen in einer Ebene ausführen, die von den drei künstlichen Muskeln aufgespannt wird.

Vorteilhaft sind auch Ausführungsformen der Vorrichtung, bei denen vier künstliche Muskeln und eine Schwingungsmasse vorgesehen sind, wobei jeder der vier künstlichen Muskeln mit einem Ende mit der Schwingungsmasse verbunden ist.

Vorteilhaft sind dabei Ausführungsformen der Vorrichtung, bei denen die vier künstlichen Muskeln an verschiedenen Seiten der Schwingungsmasse mit einem Ende angelenkt sind, wobei jeder der vier künstlichen Muskeln mit dem anderen Ende mit einem schwingungsfähigen System in der Art verbindbar ist, daß dreidimensionale Schwingungen der Schwingungsmasse realisierbar sind.

Vorteilhaft sind auch Ausführungsformen der Vorrichtung, bei denen die Schwingungsmasse eine Membran ist. Diese Membran wird - ähnlich einer Lautsprechermembran - durch Aktivierung des mindestens einen künstlichen Muskels zu Schwingungen angeregt. Dadurch wird wie bei den zuvor beschriebene Ausführungsformen das mindestens eine schwingungsfähige System zu Schwingungen angeregt bzw. beeinflußt. Zusätzlich können die von der Membran ausgehenden Schallwellen zur Beeinflussung, insbesondere Generierung, von Schwingungen genutzt werden.

Vorteilhaft sind dabei Ausführungsformen der Vorrichtung, bei denen die Membran mittels eines Rahmens ausgespannt ist.

Vorteilhaft sind Ausführungsformen der Vorrichtung, bei denen der mindestens eine künstliche Muskel bei Aktivierung expandiert und auf diese Weise eine erzwungene Schwingung der mindestens einen Schwingungsmasse herbeiführt.

Vorteilhaft sind auch Ausführungsformen der Vorrichtung, bei denen der mindestens eine künstliche Muskel bei Aktivierung kontrahiert und auf diese Weise eine erzwungene Schwingung der mindestens einen Schwingungsmasse herbeiführt.

Die beiden zuletzt genannten Ausführungsformen eignen sich insbesondere zur Anregung der mindestens einen Schwingungsmasse zu linearen d.h. eindimensionalen Schwingungen, was näher im Zusammenhang mit den Figuren erläutert werden wird.

Vorteilhaft sind auch Ausführungsformen der Vorrichtung, bei denen der mindestens eine künstliche Muskel bei Aktivierung seine äußere Form ändert und auf diese Weise eine erzwungene Schwingung der mindestens einen Schwingungsmasse herbeiführt.

Vorteilhaft sind Ausführungsformen der Vorrichtung, bei denen der mindestens eine künstliche Muskel Kohlenstoff-Nanoröhrchen umfaßt. Derartige künstliche Muskelelemente zeichnen sich durch ihre hohe Hitzebeständigkeit bis zu 1000°C aus, weshalb sie sich in außerordentlicher Weise für die Verwendung in einer Brennkraftmaschine, die hohen thermischem Belastungen ausgesetzt ist, eignen. Ferner können derartige Muskelelemente durch elektrische Energie gesteuert werden (vgl. Science vom 21.05.1999), was in einfacher Weise durch die Bordbatterie erfolgen kann. Bei Aktivierung expandieren Kohlenstoff-Nanoröhrchen.

Kohlenstoff-Nanoröhrchen können in papierähnlichen Mehrschichtstrukturen gebündelt werden und erlauben eine erhebliche Krümmung der gesamten Muskelstruktur. Sie zeichnen sich ferner durch ein geringes Verhältnis von Expansion zu Kontraktion aus, was als vorteilhaft anzusehen ist.

Vorteilhaft sind aber auch Ausführungsformen der Vorrichtung, bei denen der mindestens eine künstliche Muskel mindestens ein Polymergel umfaßt. Künstliche Muskeln auf der Basis von Polymer-Hydrogelen können durch elektrische Signale gesteuert werden und kontrahieren bei Aktivierung (vgl. Low, L. W.; Madou, M. J. "Microactuators towards microvalves for controlled drug delivery", Sensors and Actuators B: Chemical, 67 (1-2) (2000) pp. 149-160).

Grundsätzlich können aber auch künstliche Muskeln zum Einsatz kommen, die sowohl eine aktive Kontraktion als auch Expansion erlauben d. h. künstliche Muskeln, die durch geeignete Aktivierung expandieren und sich bei einer andersartigen Aktivierung zusammenziehen.

Vorteilhaft sind Ausführungsformen der Vorrichtung, bei denen der mindestens eine künstliche Muskel mindestens einen Formgedächtniswerkstoff umfaßt.

Formgedächtniswerkstoffe an sich - sogenannte shape memory materials oder shape memory alloys - sind seit mehr als fünfzig Jahren bekannt. Sie besitzen die Fähigkeit, ihre äußere Gestalt in Abhängigkeit von der Temperatur, von der magnetischen Feldstärke oder von dem hydraulischen Druck, dem sie ausgesetzt sind, oder dergleichen zu ändern. Unter die Formgedächtniswerkstoffe werden im Rahmen der vorliegenden Erfindung sämtliche Werkstoffe subsumiert, die über ein Formgedächtnis verfügen, insbesondere die Formgedächtnislegierungen wie NiTi (Nitinol), Fe-Pt, Cu-Al-Ni, Fe-Pd, Fe-Ni, Cu-Zn-Al, CuAlMn, aber auch Keramiken mit Formgedächtnis, wie beispielsweise Ce-TZP-Keramik.

Beispielsweise kann eine aus einem länglichen Draht geformte Büroklammer ihre Gestalt in der Art ändern, daß die Büroklammer - in einen Topf mit heißem Wasser gelegt - mit steigender Temperatur und bei Erreichen einer sogenannten Übergangstemperatur T' in ihre ursprüngliche Form übergeht d.h. die Gestalt eines länglichen Drahtes annimmt. Sie ändert dabei ihre äußere Gestalt oder - mit anderen Worten gesagt - ihre strukturelle Konfiguration.

Ist dieser Transformationsprozeß umkehrbar, so handelt es sich bei dem Formgedächtniswerkstoff um einen sogenannten Zwei-Weg-Formgedächtniswerkstoff, andernfalls um einen Ein-Weg-Formgedächtniswerkstoff.

Folglich könnte der oben beschriebene Übergang der Büroklammer zu einem länglichen Draht bei geeigneter Auswahl eines Zwei-Weg-Formgedächtniswerkstoffes rückgängig gemacht werden. Hierzu wird die Temperatur abgesenkt, wobei der Draht sich bei Unterschreiten einer Übergangstemperatur T" zu einer Büroklammer umformt. Die Aktivierung durch Temperaturveränderung soll nur als Beispiel verstanden werden. Für den vorliegenden Fall - einer unter Verwendung von Formgedächtniswerkstoffe hergestellten Vorrichtung zur Beeinflussung von Schwingungen - ist die Aktivierung mittels elektrischer Signale eher geeignet.

Die Ausbildung einer erfindungsgemäßen Vorrichtung erfordert einen Zwei -Weg-Formgedächtniswerkstoff, so daß der Aktuator zur Anregung der Schwingungsmasse gezielt verkürzt und verlängert werden kann.

Vorteilhaft sind Ausführungsformen der Vorrichtung, bei denen der mindestens eine künstliche Muskel elektrisch steuerbar ist. Insbesondere kann dabei die vom Muskelelement erzeugte mechanische Energie aus der elektrischen Energie des Signals stammen. Elektrisch gesteuerte künstliche Muskelelemente haben den Vorteil, daß diese mit der üblichen Steuerungstechnik einer Brennkraftmaschine kompatibel sind.

Vorteilhaft sind Ausführungsformen der Vorrichtung, bei denen der mindestens eine künstliche Muskel stufenweise steuerbar ist, insbesondere zweistufig schaltbar ist. Eine derartige Ausbildung des Aktuators der Vorrichtung erleichtert die Steuerung, insbesondere wenn der künstliche Muskel gemäß einer Ein-Aus-Schaltung funktioniert d. h. lediglich von einem deaktivierten Zustand - Ruheposition - in einen aktivierten Zustand - Arbeitsposition - wechselt und umgekehrt. Komplexe Kennfelder müssen bei dieser Ausführungsform nicht generiert und bereitgestellt werden, wie dies beispielsweise bei stufenlos steuerbaren künstlichen Muskelelementen bzw. Aktuatoren erforderlich ist.

Vorteilhaft sind aber unter anderen Gesichtpunkten auch Ausführungsformen der Vorrichtung, bei denen der mindestens eine künstliche Muskel stufenlos steuerbar ist. Dies gestattet eine größere Vielfalt und Flexibilität bei der Anregung der mindestens einen Schwingungsmasse und ermöglicht die Generierung komplexer Schwingungen.

Vorteilhaft sind Ausführungsformen der Vorrichtung, bei denen die Schwingungsmasse zumindest teilweise durch den mindestens einen künstlichen Muskel gebildet wird. Der mindestens eine künstliche Muskel weist selbst eine Masse auf, die bei Aktivierung und Deaktivierung des Muskels infolge der Gestaltänderung des Muskels in Schwingungen versetzt wird, Trägheitskräfte hervorruft und Schallwellen ausstrahlt.

Vorteilhaft sind dabei Ausführungsformen der Vorrichtung, bei denen der mindestens eine künstliche Muskel die Schwingungsmasse darstellt. Bei dieser Ausführungsform ist der Aktuator bzw. der Erreger der Schwingung, nämlich der mindestens eine künstliche Muskel, gleichzeitig die Schwingungsmasse, die zur Beeinflussung des Schwingungsverhaltens eines schwingungsfähigen Systems zu erzwungenen Schwingungen angeregt wird. Oder mit anderen Worten ausgedrückt ist die Schwingungsmasse selbst als künstlicher Muskel ausgeführt, der mittels elektrischer Signale oder dergleichen aktiviert und zu Schwingungen angeregt wird, weshalb kein zusätzlicher separater Erreger in Gestalt eines weiteren künstlichen Muskels vorgesehen werden muß.

Die zweite der Erfindung zugrunde liegende Teilaufgabe wird gelöst durch ein Verfahren zur Beeinflussung der Schwingungen mindestens eines schwingungsfähigen Systems, insbesondere zur Erzeugung, Kompensierung und Isolierung von Schwingungen, unter Verwendung einer Vorrichtung mit mindestens einer Schwingungsmasse und einem Aktuator, bei dem die mindestens eine Schwingungsmasse mittels des Aktuators zu einer erzwungenen Schwingung anregt wird und diese erzwungene Schwingung zur Beeinflussung des Schwingungsverhaltens des mindestens einen schwingungsfähigen Systems in dieses mindestens eine schwingfähige System eingeleitet wird, und das dadurch gekennzeichnet ist, daß ein Aktuator verwendet wird, der mindestens einen künstlichen Muskel umfaßt, wobei durch Aktivierung des mindestens einen künstlichen Muskels die mindestens eine Schwingungsmasse zu einer erzwungenen Schwingungen anregt wird.

Das bereits für die erfindungsgemäße Vorrichtung Gesagte gilt auch für das erfindungsgemäße Verfahren.

Vorteilhaft sind Ausführungsformen des Verfahrens, bei denen der mindestens eine künstliche Muskel elektrisch aktiviert d. h. gesteuert wird. Dies erleichtert die Aktivierung des künstlichen Muskels aufgrund bereits an der Brennkraftmaschine vorhandener Systeme. Die Aktivierung kann mittels der Motorsteuerung und der Bordbatterie realisiert werden.

Im folgenden wird die Erfindung anhand von sieben Ausführungsbeispielen gemäß den Figuren 1 bis 7 näher beschrieben. Hierbei zeigt:
- Fig. 1: schematisch in der Seitenansicht eine erste Ausführungsform der Vorrichtung,
- Fig. 2: schematisch in der Seitenansicht eine zweite Ausführungsform der Vorrichtung,

- Fig. 3: schematisch in der Seitenansicht eine dritte Ausführungsform der Vorrichtung,
- Fig. 4: schematisch in der Seitenansicht eine vierte Ausführungsform der Vorrichtung,
- Fig. 5: schematisch in der Seitenansicht eine fünfte Ausführungsform der Vorrichtung,
- Fig. 6: schematisch in der Seitenansicht eine sechste Ausführungsform der Vorrichtung, und
- Fig. 7: schematisch in der Seitenansicht eine siebte Ausführungsform der Vorrichtung.

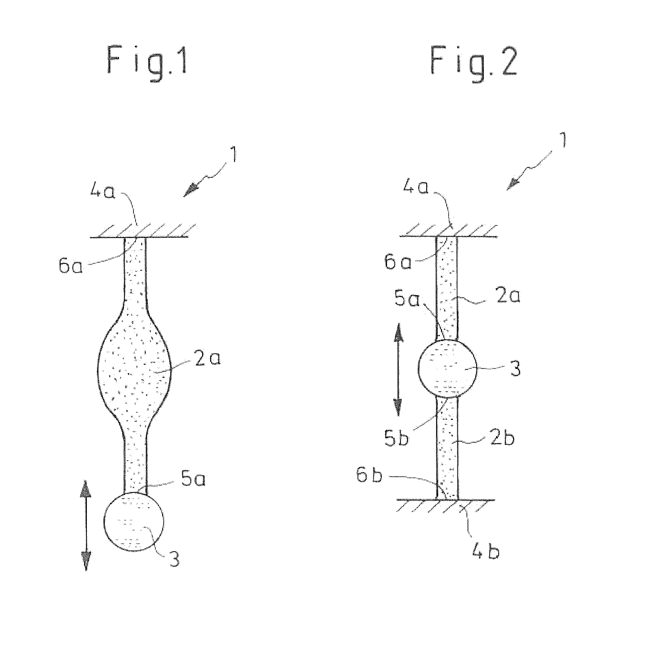

Figur 1 zeigt schematisch eine erste Ausführungsform der Vorrichtung 1 zur Beeinflussung der Schwingungen mindestens eines schwingungsfähigen Systems 4a.

Die Vorrichtung 1 dient zur Erzeugung, Kompensierung und Isolierung von Schwingungen eines schwingungsfähigen Systems 4a. Hierzu ist die Vorrichtung 1 mit einer Schwingungsmasse 3 und einem Aktuator, der einen künstlichen Muskel 2a umfaßt, ausgestattet. Durch Aktivierung des künstlichen Muskels 2a wird die Schwingungsmasse 3 zu einer erzwungenen Schwingungen anregt. Zur Einleitung der Schwingungen der Schwingungsmasse 3 in das schwingungsfähige System 4a, ist der künstliche Muskel 2a mit einem Ende 5a mit der Schwingungsmasse 3 verbunden. Das andere Ende 6a des künstlichen Muskels 2a ist mit dem schwingungsfähigen System 4a verbunden. Durch Aktivierung ändert der künstliche Muskel 2a seine äußere Gestalt. Bei Verwendung eines künstlichen Muskels 2a, der bei Aktivierung expandiert bzw. kontrahiert können eindimensionale Schwingungen der Schwingungsmasse 3 erzwungen werden, was durch einen Doppelpfeil angedeutet ist.

Figur 2 zeigt schematisch eine zweite Ausführungsform der Vorrichtung 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 gezeigten Ausführungsform verfügt die in Figur 2 dargestellte Vorrichtung 1 über zwei künstliche Muskeln 2a, 2b, wobei jeder der beiden künstlichen Muskeln 2a, 2b mit einem Ende 5a, 5b mit der Schwingungsmasse 3 verbunden ist.

Dabei sind die beiden künstlichen Muskeln 2a, 2b an gegenüberliegenden Seiten der Schwingungsmasse 3 angelenkt. Mit dem anderen Ende 6a, 6b ist jeder der beiden künstlichen Muskeln 2a, 2b mit einem schwingungsfähigen System 4a, 4b verbunden, wobei die künstlichen Muskeln 2a, 2b mit verschiedenen oder demselben schwingungsfähigen System 4a, 4b verbunden werden können d. h. dasselbe System 4a, 4b oder verschiedene Systeme 4a, 4b bei Aktivierung anregen.

Die Schwingungsmasse 3 ist zwischen den beiden künstlichen Muskeln 2a, 2b aufgespannt, so daß die Schwingungsmasse 3 bei Aktivierung mindestens eines künstlichen Muskels 2a, 2b eindimensionale, oszillierende Schwingungen vollzieht.

Der zweite zusätzliche Muskel 2b stabilisiert die oszillierende Bewegung der Schwingungsmasse 3. Des weiteren besteht die Möglichkeit, daß die Aktivierung bzw. Steuerung der beiden künstlichen Muskeln 2a, 2b aufeinander abgestimmt wird, beispielsweise in der Art, daß die Erregerkraft verstärkt wird. Dies kann dadurch erreicht werden, daß der erste künstliche Muskel 2a unter Verwendung von Kohlenstoff-Nanoröhrchen, die bei Aktivierung expandieren, und der zweite künstliche Muskel 2b unter Verwendung von Polymergel, das sich bei Aktivierung kontrahiert, ausgebildet wird. Alternativ können auch gleichartige Muskeln 2a, 2b verwendet werden, die entgegengesetzt angesteuert d. h. aktiviert werden.

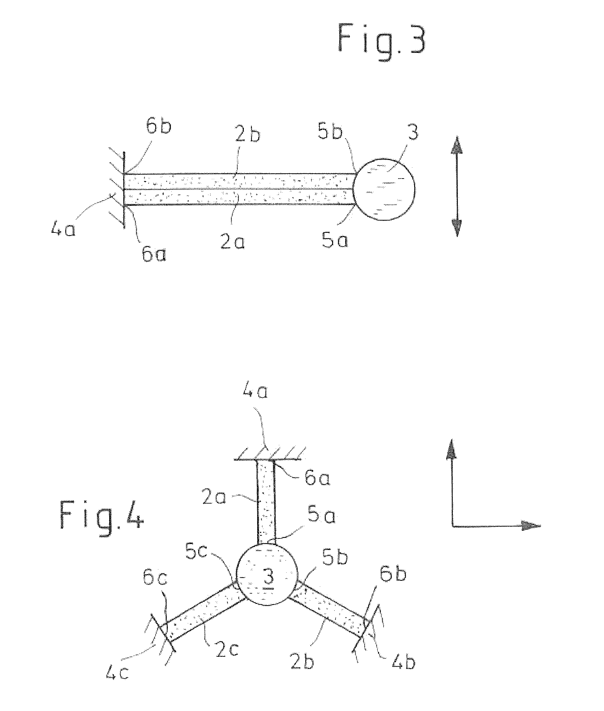

Figur 3 zeigt schematisch eine dritte Ausführungsform der Vorrichtung 1. Es sollen nur die Unterschiede zu der in Figur 2 dargestellten Ausführungsform erörtert werden, weshalb im übrigen bezug genommen wird auf Figur 2. Für dieselben Bauteile wurden dieselben Bezugszeichen verwendet.

Zwar weist auch die in Figur 3 dargestellte Ausführungsform zwei künstliche Muskeln 2a, 2b auf. Im Unterschied zu der in Figur 2 gezeigten Ausführungsform sind die beiden künstlichen Muskeln 2a, 2b bei der in Figur 2 dargestellten Vorrichtung 1 an derselben Seite der Schwingungsmasse 3 angelenkt.

Mit dem anderen Ende 6a, 6b ist jeder der beiden künstlichen Muskeln 2a, 2b mit einem schwingungsfähigen System 4a verbunden, wobei die beiden Muskeln 2a, 2b schichtartig aufeinander angeordnet sind und dadurch einen Verbund - ähnlich einem Biegebalken - bilden. Auf diese Weise kann die Schwingungsmasse 3 bei Verwendung gleichartiger künstlicher Muskeln 2a, 2b und alternierender Aktivierung zu Schwingungen quer zu den Längsachsen der künstlichen Muskeln 2a, 2b angeregt werden. Dabei schwingt der Muskelverbund ähnlich einem Biegebalken, der zu Biegeschwingungen angeregt wird, wodurch die an den Enden 5a, 5b der beiden Muskeln 2a, 2b vorgesehene Schwingungsmasse 3 um den Anlenkpunkt der Muskeln 2a, 2b am schwingungsfähigen System 4a schwingt.

Diese Ausführungsform der Vorrichtung 1 gestattet die Generierung von Trägheitsmomenten infolge der rotationsähnlichen Bewegung der Schwingungsmasse 3 quer zu den Längsachsen der künstlichen Muskeln 2a, 2b.

Figur 4 zeigt schematisch eine vierte Ausführungsform der Vorrichtung 1. Es sollen nur die Unterschiede zu der in Figur 2 dargestellten Ausführungsform erörtert werden, weshalb im übrigen bezug genommen wird auf Figur 2. Für dieselben Bauteile wurden dieselben Bezugszeichen verwendet.

Im Unterschied zu der in Figur 2 gezeigten Ausführungsform verfügt die in Figur 4 dargestellte Vorrichtung 1 über drei künstliche Muskeln 2a, 2b, 2c, wobei jeder der drei künstlichen Muskeln 2a, 2b, 2c mit einem Ende 5a, 5b, 5c mit der Schwingungsmasse 3 verbunden ist.

Die drei künstlichen Muskeln 2a, 2b, 2c sind an verschiedenen Seiten der Schwingungsmasse 3 angelenkt. Mit dem anderen Ende 6a, 6b, 6c ist jeder der drei künstlichen Muskeln 2a, 2b, 2c mit einem schwingungsfähigen System 4a, 4b, 4c in der Art verbunden, daß die Schwingungsmasse 3 zweidimensionale Schwingungen in einer Ebene ausführen kann, die von den drei künstlichen Muskeln 2a, 2b, 2c aufgespannt wird.

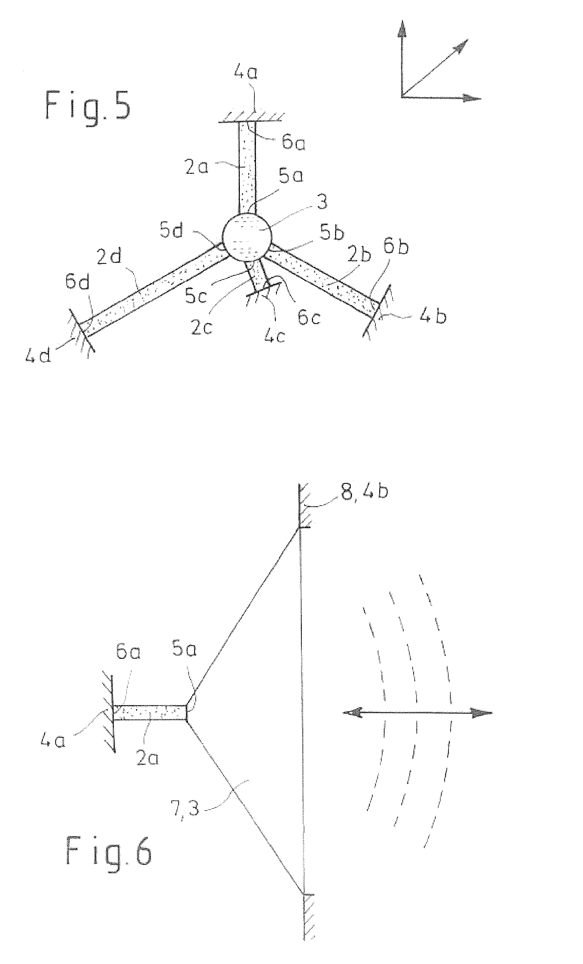

Figur 5 zeigt schematisch eine fünfte Ausführungsform der Vorrichtung 1. Es sollen nur die Unterschiede zu der in Figur 4 dargestellten Ausführungsform erörtert werden, weshalb im übrigen bezug genommen wird auf Figur 4. Für dieselben Bauteile wurden dieselben Bezugszeichen verwendet.

Im Unterschied zu der in Figur 4 gezeigten Ausführungsform verfügt die in Figur 5 dargestellte Vorrichtung 1 über vier künstliche Muskeln 2a, 2b, 2c, 2d, wobei jeder der vier künstlichen Muskeln 2a, 2b, 2c, 2d mit einem Ende 5a, 5b, 5c, 5d mit der Schwingungsmasse 3 verbunden ist.

Die vier künstlichen Muskeln 2a, 2b, 2c, 2d sind an verschiedenen Seiten der Schwingungsmasse 3 mit einem Ende 5a, 5b, 5c, 5d angelenkt und jeweils mit dem anderen Ende 6a, 6b, 6c, 6d mit einem schwingungsfähigen System 4a, 4b, 4c, 4d in der Art verbunden, daß die Schwingungsmasse 3 bei Aktivierung mindestens eines der vier künstlichen Muskeln 2a, 2b, 2c, 2d dreidimensionale Schwingungen ausführt.

Figur 6 zeigt schematisch eine sechste Ausführungsform der Vorrichtung 1. Im Unterschied zu den zuvor beschriebenen Ausführungsformen verfügt die in Figur 6 dargestellte Vorrichtung 1 über eine Schwingungsmasse 3, die elastisch ausgebildet ist. Dabei ist die Schwingungsmasse 3 als Membran 7 ausgebildet, die mittels eines Rahmens 8, der als solcher auch ein schwingungsfähiges System 4b darstellt, ausgespannt wird. Diese Membran 7 wird durch Aktivierung eines künstlichen Muskels 2a zu Schwingungen angeregt, wobei der künstliche Muskel 2a mit einem Ende 5a mit der Membran 7 und mit dem anderen Ende 6a mit einem schwingungsfähigen System 4a verbunden ist. Dadurch wird wie bei den zuvor beschriebenen Ausführungsformen zumindest das erste schwingungsfähige System 4a zu Schwingungen angeregt bzw. in seinem Schwingungsverhalten beeinflußt.

Zusätzlich können die von der Membran 7 ausgehenden Schallwellen zur Beeinflussung, insbesondere Generierung, von Schwingungen genutzt werden.

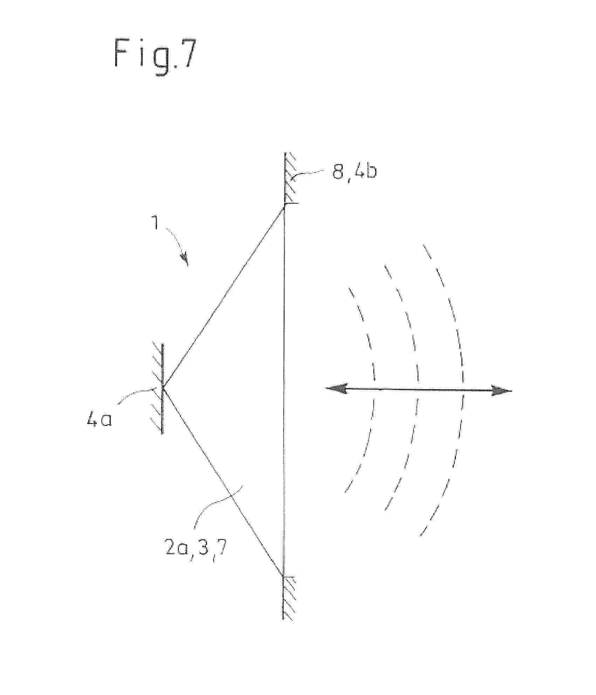

Figur 7 zeigt schematisch eine siebte Ausführungsform der Vorrichtung 1. Es sollen nur die Unterschiede zu der in Figur 6 dargestellten Ausführungsform erörtert werden, weshalb im übrigen bezug genommen wird auf Figur 6. Für dieselben Bauteile wurden dieselben Bezugszeichen verwendet.

Im Unterschied zu der in Figur 6 gezeigten Ausführungsform wird bei der in Figur 7 dargestellten Vorrichtung 1 die Schwingungsmasse 3 selbst als künstlicher Muskel 2a ausgebildet, der mittels elektrischer Signale aktiviert und zu Schwingungen angeregt wird, weshalb kein zusätzlicher separater Erreger in Gestalt eines weiteren künstlichen Muskels - wie in Figur 6 dargestellt - vorgesehen werden muß.

Der künstliche Muskel 2a weist selbst eine Masse auf, die bei Aktivierung und Deaktivierung des Muskels 2a infolge der Gestaltänderung des Muskels 2a in Schwingungen versetzt wird, Trägheitskräfte hervorruft und Schallwellen ausstrahlt.

Bei dieser Ausführungsform ist der Aktuator bzw. der Erreger der Schwingung, nämlich der mindestens eine künstliche Muskel 2a, gleichzeitig die Schwingungsmasse 3, die zur Beeinflussung des Schwingungsverhaltens eines schwingungsfähigen Systems 4a, 4b zu erzwungenen Schwingungen angeregt wird.

### Bezugszeichen

- 1: Vorrichtung
- 2a: erster künstlicher Muskel
- 2b: zweiter künstlicher Muskel
- 2c: dritter künstlicher Muskel
- 2d: vierter künstlicher Muskel
- 3: Schwingungsmasse
- 4a: erstes schwingungsfähiges System
- 4b: zweites schwingungsfähiges System
- 4c: drittes schwingungsfähiges System
- 4d: viertes schwingungsfähiges System
- 5a: ein Ende des ersten künstlichen Muskels
- 5b: ein Ende des zweiten künstlichen Muskels
- 5c: ein Ende des dritten künstlichen Muskels
- 5d: ein Ende des vierten künstlichen Muskels
- 6a: anderes Ende des ersten künstlichen Muskels
- 6b: anderes Ende des zweiten künstlichen Muskels
- 6c: anderes Ende des dritten künstlichen Muskels
- 6d: anderes Ende des vierten künstlichen Muskels
- 7: Membran
- 8: Rahmen

- ↕: Schwingungsrichtungen eindimensionaler Schwingungen

## Patentansprüche

1. Vorrichtung (1) zur Beeinflussung der Schwingungen mindestens eines schwingungsfähigen Systems (4a, 4b, 4c, 4d), insbesondere zur Erzeugung, Kompensierung und Isolierung von Schwingungen, die mit mindestens einer Schwingungsmasse (3) ausgestattet ist und einen Aktuator aufweist, mit dem diese mindestens eine Schwingungsmasse (3) zu einer erzwungenen Schwingung anregbar ist, wobei die Vorrichtung (1) zwecks Einleitung der Schwingungen der mindestens einen Schwingungsmasse (3) mit dem mindestens einen schwingungsfähigen System (4a, 4b, 4c, 4d) verbindbar ist,
**dadurch gekennzeichnet, daß**
der Aktuator mindestens einen künstlichen Muskel (2a, 2b, 2c, 2d) umfaßt, durch dessen Aktivierung die mindestens eine Schwingungsmasse (3) zu einer erzwungenen Schwingungen anregbar ist.

2. Vorrichtung (1) nach Anspruch 1,
**dadurch gekennzeichnet, daß**
die Vorrichtung (1) mit dem mindestens einen schwingungsfähigen System (4a, 4b, 4c, 4d) mittels des mindestens einen künstlichen Muskels (2a, 2b,2c, 2d) verbindbar ist.

3. Vorrichtung (1) nach Anspruch 1 oder 2,
**dadurch gekennzeichnet, daß**
der mindestens eine künstliche Muskel (2a, 2b, 2c, 2d) mit einem Ende (5a, 5b, 5c, 5d) mit der mindestens einen Schwingungsmasse (3) verbunden ist.

4. Vorrichtung (1) nach einem der vorherigen Ansprüche,
**dadurch gekennzeichnet, daß**
ein künstlicher Muskel (2a) und eine Schwingungsmasse (3) vorgesehen sind, wobei der künstliche Muskel (2a) mit einem Ende (5a) mit der Schwingungsmasse (3) verbunden ist.

5. Vorrichtung (1) nach einem der Ansprüche 1 bis 3,
**dadurch gekennzeichnet, daß**
zwei künstliche Muskeln (2a, 2b) und eine Schwingungsmasse (3) vorgesehen sind, wobei jeder der beiden künstlichen Muskeln (2a 2b) mit einem Ende (5a, 5b) mit der Schwingungsmasse (3) verbunden ist.

6. Vorrichtung (1) nach Anspruch 5,
**dadurch gekennzeichnet, daß**
die beiden künstlichen Muskeln (2a, 2b) an gegenüberliegenden Seiten der Schwingungsmasse (3) mit einem Ende (5a, 5b) angelenkt sind, wobei jeder der beiden künstlichen Muskeln (2a, 2b) mit dem anderen Ende (6a, 6b) mit einem schwingungsfähigen System (4a, 4b) in der Art verbindbar ist, daß eindimensionale, oszillierende Schwingungen der Schwingungsmasse (3) realisierbar sind.

7. Vorrichtung (1) nach Anspruch 5,
**dadurch gekennzeichnet, daß**
die beiden künstlichen Muskeln (2a, 2b) an derselben Seite der Schwingungsmasse (3) mit einem Ende (5a, 5b) angelenkt sind, wobei jeder der beiden künstlichen Muskeln (2a, 2b) mit dem anderen Ende (6a, 6b) mit einem schwingungsfähigen System (4a, 4b) in der Art verbindbar ist, daß Schwingungen der Schwingungsmasse (3) quer zu den Längsachsen der künstlichen Muskeln (2a, 2b) realisierbar sind.

8. Vorrichtung (1) nach einem der Ansprüche 1 bis 3,
**dadurch gekennzeichnet, daß**
drei künstliche Muskeln (2a, 2b, 2c) und eine Schwingungsmasse (3) vorgesehen sind, wobei jeder der drei künstlichen Muskeln (2a, 2b, 2c) mit einem Ende (5a, 5b, 5c) mit der Schwingungsmasse (3) verbunden ist.

9. Vorrichtung (1) nach Anspruch 8,
**dadurch gekennzeichnet, daß**
die drei künstlichen Muskeln (2a, 2b, 2c) an verschiedenen Seiten der Schwingungsmasse (3) mit einem Ende (5a, 5b, 5c) angelenkt sind, wobei jeder der drei künstlichen Muskeln (2a, 2b, 2c) mit dem anderen Ende (6a, 6b, 6c) mit einem schwingungsfähigen System (4a, 4b, 4c) in der Art verbindbar ist, daß zweidimensionale Schwingungen der Schwingungsmasse (3) realisierbar sind.

10. Vorrichtung (1) nach einem der Ansprüche 1 bis 3,
**dadurch gekennzeichnet, daß**
vier künstliche Muskeln (2a, 2b, 2c, 2d) und eine Schwingungsmasse (3) vorgesehen sind, wobei jeder der vier künstlichen Muskeln (2a, 2b, 2c, 2d) mit einem Ende (5a, 5b, 5c, 5d) mit der Schwingungsmasse (3) verbunden ist.

11. Vorrichtung (1) nach Anspruch 10,
**dadurch gekennzeichnet, daß**
die vier künstlichen Muskeln (2a, 2b, 2c, 2d) an verschiedenen Seiten der Schwingungsmasse (3) mit einem Ende (5a, 5b, 5c, 5d) angelenkt sind, wobei jeder der vier künstlichen Muskeln (2a, 2b, 2c, 2d) mit dem anderen Ende (6a, 6b, 6c, 6d) mit einem schwingungsfähigen System (4a, 4b, 4c, 4d) in der Art verbindbar ist, daß dreidimensionale Schwingungen der Schwingungsmasse (3) realisierbar sind.

12. Vorrichtung (1) nach einem der vorherigen Ansprüche,
**dadurch gekennzeichnet, daß**
die mindestens eine Schwingungsmasse (3) eine Membran (7) ist.

13. Vorrichtung (1) nach Anspruch 12,
**dadurch gekennzeichnet, daß**
die Membran (7) mittels eines Rahmens (8) ausgespannt ist.

14. Vorrichtung (1) nach einem der vorherigen Ansprüche,
**dadurch gekennzeichnet, daß**
der mindestens eine künstliche Muskel (2a, 2b, 2c, 2d) bei Aktivierung expandiert und auf diese Weise eine erzwungene Schwingung der mindestens einen Schwingungsmasse (3) herbeiführt.

15. Vorrichtung (1) nach einem der Ansprüche 1 bis 13,
**dadurch gekennzeichnet, daß**
der mindestens eine künstliche Muskel (2a, 2b, 2c, 2d) bei Aktivierung kontrahiert und auf diese Weise eine erzwungene Schwingung der mindestens einen Schwingungsmasse (3) herbeiführt.

16. Vorrichtung (1) nach einem der Ansprüche 1 bis 13,
**dadurch gekennzeichnet, daß**
der mindestens eine künstliche Muskel (2a, 2b, 2c, 2d) bei Aktivierung seine äußere Form ändert und auf diese Weise eine erzwungene Schwingung der mindestens einen Schwingungsmasse (3) herbeiführt.

17. Vorrichtung (1) nach einem der Ansprüche 1 bis 14,
**dadurch gekennzeichnet, daß**
der mindestens eine künstliche Muskel (2a, 2b, 2c, 2d) Kohlenstoff-Nanoröhrchen umfaßt.

18. Vorrichtung (1) nach einem der Ansprüche 1 bis 13 oder 15,
**dadurch gekennzeichnet, daß**
der mindestens eine künstliche Muskel (2a, 2b, 2c, 2d) mindestens ein Polymergel umfaßt.

19. Vorrichtung (1) nach einem der Ansprüche 1 bis 13 oder 16,
**dadurch gekennzeichnet, daß**
der mindestens eine künstliche Muskel (2a, 2b, 2c, 2d) mindestens einen Formgedächtniswerkstoff umfaßt.

20. Vorrichtung (1) nach einem der vorherigen Ansprüche,
**dadurch gekennzeichnet, daß**
der mindestens eine künstliche Muskel (2a, 2b, 2c, 2d) elektrisch steuerbar ist.

21. Vorrichtung (1) nach einem der vorherigen Ansprüche,
**dadurch gekennzeichnet, daß**
der mindestens eine künstliche Muskel (2a, 2b, 2c, 2d) stufenweise steuerbar ist.

22. Vorrichtung (1) nach Anspruch 21,
**dadurch gekennzeichnet, daß**
der mindestens eine künstliche Muskel (2a,2b,2c,2d) zweistufig schaltbar ist.

23. Vorrichtung (1) nach einem der Ansprüche 1 bis 20,
**dadurch gekennzeichnet, daß**
der mindestens eine künstliche Muskel (2a, 2b, 2c, 2d) stufenlos steuerbar ist.

24. Vorrichtung (1) nach einem der vorherigen Ansprüche,
**dadurch gekennzeichnet, daß**
die Schwingungsmasse (3) zumindest teilweise durch den mindestens einen künstlichen Muskel (2a, 2b, 2c, 2d) gebildet wird.

25. Vorrichtung (1) nach Anspruch 24,
**dadurch gekennzeichnet, daß**
der mindestens eine künstliche Muskel (2a, 2b, 2c, 2d) die Schwingungsmasse (3) darstellt.

26. Verfahren zur Beeinflussung der Schwingungen mindestens eines schwingungsfähigen Systems (4a, 4b, 4c, 4d), insbesondere zur Erzeugung, Kompensierung und Isolierung von Schwingungen, unter Verwendung einer Vorrichtung (1) mit mindestens einer Schwingungsmasse (3) und einem Aktuator, bei dem die mindestens eine Schwingungsmasse (3) mittels des Aktuators zu einer erzwungenen Schwingung anregt wird und diese erzwungene Schwingung zur Beeinflussung des Schwingungsverhaltens des mindestens einen schwingungsfähigen Systems (4a, 4b, 4c, 4d) in dieses mindestens eine schwingungsfähige System (4a, 4b, 4c, 4d) eingeleitet wird, **dadurch gekennzeichnet, daß** ein Aktuator verwendet wird, der mindestens einen künstlichen Muskel (2a, 2b, 2c, 2d) umfaßt, wobei durch Aktivierung des mindestens einen künstlichen Muskels (2a, 2b, 2c, 2d) die mindestens eine Schwingungsmasse (3) zu einer erzwungenen Schwingungen anregt wird.

27. Verfahren nach Anspruch 26,
**dadurch gekennzeichnet, daß**
der mindestens eine künstliche Muskel (2a, 2b, 2c, 2d) elektrisch aktiviert d. h. gesteuert wird.
